# EUROPEAN PATENT APPLICATION

(11) **EP 4 633 290 A1**
(43) Date of publication of application: **15.10.2025**
(21) Application number: 24223306.2
(22) Date of filing: 26.12.2024
(51) Int. Cl.: H05B 3/84, H01Q 1/02, H05B 3/26, G01S 13/931, H01Q 1/32

(54) **A HIDDEN HEATING AND DEFROSTING STRUCTURE OF MILLIMETER-WAVE RADAR COVER PLATE AND PREPARATION METHOD THEREOF, AND A MILLIMETER-WAVE RADAR COVER PLATE**

(30) Priority: 11.04.2024 CN 202410436011; 11.04.2024 CN 202420746551 U
(71) Applicant: Yanfeng Plastic Omnium Automotive Exterior Systems Co., Ltd., Shanghai 201821 (CN); OPmobility SE, 69007 Lyon (FR)
(72) Inventor: TANG, Fengfeng, SHANGHAI, 201821 (CN)
(74) Representative: LLR

(57) **Abstract**

The present invention relates to an automobile exterior panel, and in particular to a hidden heating and defrosting structure of a millimeter-wave radar cover plate and preparation method therefor, and a millimeter-wave radar cover plate. The hidden heating and defrosting structure comprises a panel body and a heating film formed on one side surface of the panel body; one side surface of the heating film is provided with a grid-like microstructure including a functional area and a pattern area; the microstructure of the functional area is a groove filled with solidified conductive ink to form a conductive network; a flexible electrode is also provided on the surface of the heating film and is electrically connected to the conductive network in the functional area. Compared with the prior art, the present invention solves the drawbacks in the prior art that it is difficult to balance the heating performance and the millimeter-wave penetration performance when heating and defrosting by means of heating wire, and that the appearance is affected when the cover is transparent. This solution forms a conductive network by forming a microstructure and filling it with conductive ink, thereby achieving good heating performance, millimeter-wave penetrability and light transmission, and the structure has a hidden effect.

## Description

The present invention relates to an automobile exterior panel, and in particular, a hidden heating and defrosting structure of millimeter-wave radar cover plate and preparation method thereof, and a millimeter-wave radar cover plate.

As automobile intelligence keeps developing, the application of autonomous driving technology is becoming more and more mature. LiDARs, cameras and millimeter-wave radars are three mainstream sensor solutions at present. Millimeter-wave radars will be a mainstream alternative to LiDARs in the future due to its great cost advantage and continuously optimized mature technology.

A cover plate is a covering on the surface of a radar sensor, which ensures that the radar beam emitted by the radar sensor can pass smoothly and can receive the reflected radar beam in return, and then generate environmental data detected by the radar sensor or produce environmental images and other information based on the reflected beam. In order to avoid the effect of fog, water, frost and snow on a millimeter-wave radar in cold weather, it is usually necessary to provide an electric heating structure for defrosting.

At present, the most widely used solution for exterior products consists in using a heating wire. Through the principle of ultrasonic high-frequency vibration, a metal wire is constantly rubbed against a product to obtain a relatively high temperature, and then enters the molten product surface. However, this type of solution has a disadvantage in that, although the wire diameter of a heating wire is only 0.05 to 0.2 mm, in order to obtain a relatively high heating efficiency, it is generally arranged at the outer side of a product. Therefore, the heating wire is basically exposed on the surface of the product, thereby affecting the overall aesthetics of the product. In addition, the heating effect of a single heating wire is limited, and multiple heating wires will affect detection of a millimetre-wave radar due to structural shielding. Existing disclosed technologies such as CN116466298A and CN219523817U have the above problems.

Currently, there are two heating and defrosting solutions for most millimetre-wave radar cover plates on the market. Solution 1 consists in arranging a heating wire on a PC diaphragm (film), and then using IML to compound it with PC particles. The disadvantage of this solution is that the heating wire is exposed, and users can directly see the heating wire from the outside, affecting the overall appearance, and making it impossible to arrange lighting because the heating wire will be more obvious after emitting light. Solution 2 consists in directly embedding a heating wire ultrasonically on a product substrate, and then using insert injection molding to sandwich the heating wire between two layers of material. This solution generally does not use transparent materials. Therefore, although it is hidden, it is not light-transmissive, and a lighting function can no longer be provided on the product.

Therefore, it is necessary to propose a defrosting structure for a millimeter-wave radar cover plate that can have a good heating and defrosting effect, does not affect the detection of a millimeter-wave radar, and can have a light-transmitting effect.

An objective of the present invention is to provide a hidden heating and defrosting structure of a millimeter-wave radar cover plate and a preparation method thereof, as well as a millimeter-wave radar cover plate, in order to solve at least one of the above problems, so as to solve the shortcomings of the prior art that it is difficult to balance the heating performance and the millimeter-wave penetration performance when heating and defrosting by heating wires, and that the appearance is affected when the cover is transparent. This solution forms a conductive network by forming a microstructure and filling it with conductive ink, thereby achieving good heating performance, millimeter-wave penetrability and light transmission, and the structure is almost invisible, does not affect appearance, and has the effect of a hidden structure.

The objective of the present invention is achieved through the following technical solutions:
A first aspect of the present invention discloses a hidden heating and defrosting structure of a millimeter-wave radar cover plate, comprising a panel body and a heating film formed on one side surface of the panel body;
one side surface of the heating film is provided with a grid-like microstructure including a functional area and a pattern area;
the microstructure of the functional area is a groove, the interior of the groove is filled with solidified conductive ink to form a conductive network;
a flexible electrode is also provided on a surface of the heating film and is electrically connected to the conductive network in the functional area.

Preferably, the grid-like microstructure is a microstructure in a honeycomb form.

Preferably, the length of a single side of the grid-like microstructure is 1-10 mm; the width of the groove is 5-20 µm, and the depth of the groove is 3-10 µm.

Preferably, the functional area is arranged in the middle of the heating film, the pattern area is arranged on both sides of the functional area, and the microstructures of the functional area and the pattern area are disconnected.

Preferably, the flexible electrode is provided in a pair and is connected to the two ends of the conductive network respectively.

Preferably, the hidden heating and defrosting structure further comprises a decorative film formed on a surface of another side of the panel body or formed on a surface of another side of the heating film.

When the decorative film is formed on the surface of another side of the panel body, the decorative film and the heating film are respectively located on two sides of the panel body; during assembly, surface orientation can be determined according to needs and performance requirements.

When the decorative film is formed on the surface of another side of the heating film, that is, the decorative film and the heating film share the same base film, there are three states in this situation: 1) heating film I base film I decorative film - panel body, 2) decorative film I base film I heating film - panel body, 3) panel body - heating film I base film I decorative film - UV hardening paint, wherein 1) and 2) correspond to the situations when a composite functional film is arranged on the outer surface of the panel body 2, while 3) corresponds to the situation when the composite functional film is arranged on the inner surface of the panel body 2.

Preferably, the heating film is a transparent polycarbonate film, and the panel body is made of PC particles.

Preferably, the thickness of the panel body is 4 mm, the thickness of the heating film is 0.5 mm, and the thickness of the decorative film is 0.5 mm.

A second aspect of the present invention discloses a preparation method for a hidden heating and defrosting structure of a millimeter-wave radar cover plate as described above, comprising the following steps:
S1: Prepare a master with a microstructure by photolithography or machining, and then transfer the microstructure to a surface of a film by UV embossing to form a film with a microstructure;
S2: Apply a conductive ink to the microstructure of the film by scrape coating (blade coating) and solidify it to form a conductive network;
S3: Adhere a flexible electrode on the film and connect the flexible electrode to the conductive network;
S4: Perform high-pressure forming on the film to obtain a heating film, and then remove excess flanges;
S5: Place the heating film as an insert on a surface of a panel body for injection molding to obtain the hidden heating and defrosting structure.

A third aspect of the present invention discloses a millimeter-wave radar cover plate that adopts any one of the hidden heating and defrosting structures as described above.

Preferably, a surface of the millimeter-wave radar cover plate is further provided with an anti-UV coating.

Compared with the prior art, the present invention has the following beneficial effects:
The present solutions can hide the structure of the heating part to a great extent while ensuring the heating function, which can effectively improve the consistency of appearance and styling, thereby enhancing the competitiveness of a product.

In the present solutions, the heating film can be arranged in an area close to the outer surface of the product, so as to obtain good heating performance; the pattern design of the heating film microstructure can ensure good penetration of the 77 to 79 GHz radar waves commonly used by millimeter-wave radars, with a one-way loss of 0.45 to 0.7 dB and a one-way reflection of <-15 dB. At the same time, visually, it can be almost completely hidden and invisible to the naked eye; further, after the product is lit, the heating pattern does not obstruct (hinder) the light. Therefore, according to this technical solution, a millimeter-wave radar panel with wave transmission, hidden heating, and light transmission can be prepared, and a more harmonious appearance effect can be obtained while ensuring the function.

The grid-like microstructure, especially the honeycomb microstructure, fills the entire surface area of the panel body. By controlling the size of the microstructure and the isolation and disconnection of the functional area and the pattern area, the size of the heating area can be controlled to achieve a smaller device resistance. The minimum resistance of this solution can reach about 5-20 Ω. At the same time, maintaining the grid pattern across the entire format is also helps achieve the hidden effect.
Figure 1 is a schematic diagram of the structure of a heating film and a flexible electrode;
Figure 2 is an exploded schematic diagram of the structure of a hidden heating and defrosting structure;

In the figures: 1-heating film; 2-panel body; 3-decorative film; 11-functional area; 12-pattern area; 13-flexible electrode.

The present invention is described in detail below with reference to the accompanying drawings and specific embodiments.

In the examples described below, unless otherwise specified, the reagents used are conventional commercial products, and the methods used are well known in the art.

### Embodiment 1

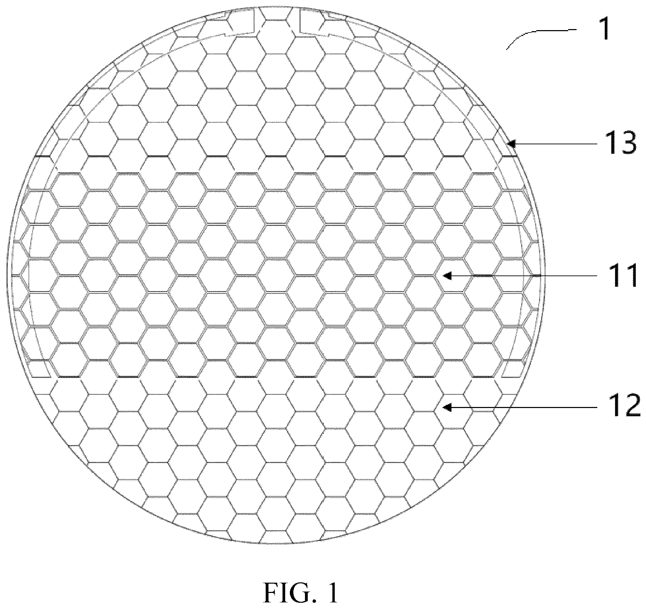

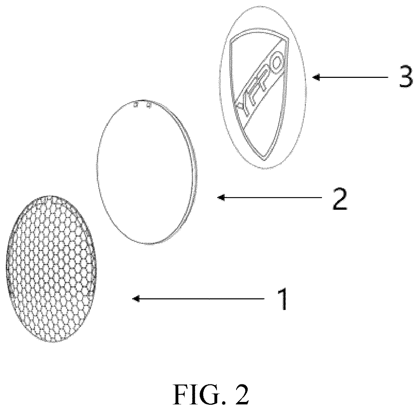

As shown in Figures 1 and 2, a hidden heating and defrosting structure of a millimeter-wave radar cover plate comprises a panel body 2 and a heating film 1 formed on one side surface of the panel body 2;
one side surface of the heating film 1 is provided with a grid-like microstructure comprising a functional area 11 and a pattern area 12;
the microstructure of the functional area 11 is a groove filled with solidified conductive ink to form a conductive network;
a surface of the heating film 1 is also provided with a flexible electrode 13 electrically connected to the conductive network in the functional area 11.

More specifically, in this embodiment:
As shown in Figures 1 and 2, the hidden heating and defrosting structure is composed of a panel body 2, and a heating film 1 and a decorative film 3 respectively formed on two sides of the panel body 2.

The material used for the panel body 2 is PC particles with a thickness of 4 mm, and the substrates of the heating film 1 and the decorative film 3 are respectively made of a transparent polycarbonate film with a thickness of 0.5 mm.

A decorative layer (pattern layer) on the decorative film 3 is formed on the transparent polycarbonate film by printing.

The heating film 1 is specifically shown in FIG. 1. It is a grid-like microstructure that completely covers one side surface of the panel body 2. The microstructure can be further divided into a heating functional area 11 in the middle and non-heating pattern areas 12 on both sides: the microstructure of the functional area 11 is a groove, as shown in Figure 1 , the microstructure of the functional area 11 has a relatively thick side, and the interior thereof is filled with a solidified conductive ink, so that a cross-linked conductive network can be formed in the functional area 11; the microstructure of the pattern areas 12 maintains a shape similar to the microstructure of the functional area 11, specifically a relatively thin and shallow groove, and the microstructure of the pattern areas 12 is also filled with a layer of conductive ink to ensure consistency of appearance. As shown in Figure 1, the microstructure of the pattern areas 12 has a relatively thin side. In addition, the microstructures of the functional area 11 and the pattern areas 12 are separated/blocked and disconnected, so that the conductive network is only formed and conducted in the functional area 11, thereby effectively limiting the size of the functional area 11 to accurately control the heating film 1 to have a relatively smaller device resistance.

In this solution, the conductive ink can be conductive silver paste or other conductive materials; the microstructure adopts a hexagonal honeycomb microstructure, in which the single side length of the grid can be 1-1 0mm, the groove width of the functional area 11 can be 5-20µm, and the groove depth can be 3-10µm. In this case, the minimum resistance can reach about 5-20Ω.

In addition, a pair of flexible electrodes 13 are adhered to the surface of the heating film 1 and are electrically connected to the conductive network formed by the functional area 11, as shown in Figure 1, they are adhered along the edge of the heating film 1 to completely cover the ends of the conductive network. A pair of slots are provided on the panel body 2 at the positions corresponding to the ends of the flexible electrodes 13 to introduce and connect external wiring to the flexible electrodes 13, enabling the formation of a circuit loop, so that the conductive network, after being powered, can be heated to achieve a defrosting effect. The flexible electrodes 13 can also be connected by printing conductive silver paste.

Typically, in the hidden heating and defrosting structure: the heating film 1 is used as the front and the decorative film 3 is used as the back, forming a panel with a hidden heating function on the front and a light-transmitting decorative pattern on the back. In this situation, the color of the conductive ink can be adjusted and optimized according to a customer's needs to meet the hidden requirements. As required, the directions of the heating film 1 and the decorative film 3 can also be swapped. Thus, there is no need to consider the matching problem between the color of the conductive ink and the decorative film.

The hidden heating and defrosting structure is prepared by the following steps:
Step 1: Use a photolithography equipment or precision machining equipment to make a master with a micron-level microstructure, and then use UV embossing technology to transfer the microstructure from the master to a surface of a film (transparent polyester film), forming a film with a microstructure. In this step, the transparent polyester film is preferably a transparent polycarbonate film with the thickness of 0.5 mm.
Step 2: Fill conductive ink into the microstructure of the film by scrape (blade) coating, and then solidify it to form a conductive network.
Step 3: Adhere a flexible electrode 13 at both ends of the conductive network of the functional area 11 to complete the preparation of a film with a heating function.
Step 4: Take another transparent polyester film and print a decorative pattern on its surface, wherein part of the pattern is light-transmissive, thereby forming a film with a pattern layer.
Step 5: Form the two films (the film with a heating function and the film with a pattern layer) after completing steps 1 to 4 into films with the product 3D shape by performing high-pressure preforming method, which are the heating film 1 and the decorative film 3 respectively.
Step 6: Cut the formed heating film 1 and decorative film 3, and remove excess process flange, to ensure that the two films can be normally placed in a core and a cavity of a mold.
Step 7: Place the two cut films as inserts in the mold, fill it with a polycarbonate material and perform IML injection molding to obtain a 3D-configured panel with a hidden heating function on the front and a light-transmitting decorative pattern on the back, thereby obtaining the hidden heating and defrosting structure.

A hidden heating and defrosting structure is obtained, in which the side surface of the heating film 1 with the microstructure and the side surface of the decorative film 3 with the decorative pattern layer are both arranged toward the panel body 2. Thus, the final structure sequence formed is: PC film I heating microstructure I PC particles I decorative pattern I PC film.

When assembling the millimeter-wave radar cover plate, it is preferred to arrange the heating film 1 as the outer face of the millimeter-wave radar cover plate and the decorative film 3 as the inner face. If the structure can meet the heating performance requirements and actual conditions, the decorative film 3 can also be arranged to face outward. In this situation, the requirements for color matching and light resistance of the conductive ink material in the heating film can be reduced.

### Embodiment 2

This embodiment is basically similar to Embodiment 1, the main difference is that the method can also: make the conductive ink layer (heating layer of the heating film 1) and the decorative ink layer (pattern layer of the decorative film 3) on two sides, front and back, of the same transparent polycarbonate film (base film), and then form it on the panel body 2, thereby simplifying the film forming and injection molding process. In this situation, there is a functional layer (heating microstructure or decorative pattern) exposed on the outer surface, which needs to be protected additionally.

The composite functional film (a PC film with a heating microstructure and a decorative pattern arranged on both sides surfaces) is placed on the outer surface of the panel body 2, and then an IMC process is performed on the surface to protect it, forming an embedded structure to obtain a hidden heating and defrosting structure.

Thus, the structure can be assembled to obtain three states of millimeter-wave radar cover plate, including: 1) heating film 1 | base film I decorative film 3-panel body 2, 2) decorative film 3 | base film I heating film 1-panel body 2, 3) panel body 2-heating film 1 | base film I decorative film 3-UV hardening paint; wherein 1) and 2) correspond to the situations when the composite functional film is arranged on the outer surface of the panel body 2, and IMC treatment is required to protect the outer surface, whereas 3) is case where the composite functional film is disposed on the inner surface of the panel body 2, and only the surface needs to be treated with an anti-UV hardening paint.

In addition, after the injection molding of the millimeter-wave radar cover plates of Embodiment 1 and Embodiment 2 is completed, an anti-UV hardening paint can be sprayed on the surface of the product to form an anti-UV layer to protect the cover plates.

As shown in Figure 1, the hexagonal grid pattern of the present solution fills the entire area of the front face of the film, wherein the length of a single side of the grid can be 1-10 mm, the line width of the conductive ink in the functional area 11 is 5-20 µm, and the groove depth is 3-10 µm. wherein the thick line portion is used as the heating functional area 11, which is separated/blocked and disconnected from the upper and lower, thinner grid pattern areas 12. In this way, the size of the heating area can be controlled to achieve a relatively small device resistance value, and the minimum resistance value can reach about 5-20 Ω, and at the same time, maintaining the grid pattern across the entire format is also conducive to achieving a hidden effect.

As shown in Figure 2, this heating film 1 can be formed on the surface of the product, and the light-transmissive decorative film 3 is located on the back of the product. Through a double-sided IML process, a panel with a decorative function and with the heating film on the surface of the panel is obtained.

In summary, by means of the technology proposed in the present solution, a heating zone can be arranged in an area close to the outer surface of the product, so as to obtain good heating performance; the pattern design of the heating film 1 can ensure good penetration of 77 to 79 GHz radar waves commonly used by millimeter-wave radars, with a one-way loss of 0.45 to 0.7 dB and a one-way reflection of <-15 dB. At the same time, visually, it can be made almost completely hidden and invisible to the naked eye, and the heating pattern does not obstruct light after the product is lit. According to this technical solution, a millimeter-wave radar panel with wave transmission, hidden heating, and light transmission can be prepared, and a more harmonious appearance effect can be obtained while ensuring functions. The structure of the heating part is hidden to a great extent, which can effectively improve consistency of appearance and shape, thereby enhancing the competitiveness of the product.

The above description of embodiments is to help those skilled in the art understand and use the present invention. It is obvious that those skilled in the art can easily make various modifications to these embodiments and apply the general principles described herein to other embodiments without creative effort. Therefore, the present invention is not limited to the above embodiments. Improvements and modifications made by those skilled in the art based on the disclosure of the present invention without departing from the scope of the present invention shall fall within the scope of protection of the present invention.

## Claims

1. A hidden heating and defrosting structure of a millimeter-wave radar cover plate, **characterized in that**, it comprises a panel body (2) and a heating film (1) formed on one side surface of the panel body (2);
one side surface of the heating film (1) is provided with a grid-like microstructure including a functional area (11) and a pattern area (12); the microstructure of the functional area (11) is a groove, and an interior of the groove is filled with solidified conductive ink to form a conductive network;
a flexible electrode (13) is also provided on a surface of the heating film (1) and is electrically connected to the conductive network in the functional area (11).

2. The hidden heating and defrosting structure of a millimeter-wave radar cover plate according to the precedent claim, wherein the grid-like microstructure is a microstructure in a honeycomb form.

3. The hidden heating and defrosting structure of a millimeter-wave radar cover plate according to any one of the precedent claims, wherein the length of a single side of the grid-like microstructure is 1-10 mm; the width of the groove is 5-20 µm, and the depth of the groove is 3-10 µm.

4. The hidden heating and defrosting structure of a millimeter-wave radar cover plate according to any one of the precedent claims, wherein the functional area (11) is arranged in the middle of the heating film (1), the pattern area (12) is arranged on both sides of the functional area (11), and the microstructures of the functional area (11) and the pattern area (12) are disconnected.

5. The hidden heating and defrosting structure of a millimeter-wave radar cover plate according to any one of the precedent claims, wherein the flexible electrode (13) is provided in a pair and is connected to two ends of the conductive network respectively.

6. The hidden heating and defrosting structure of a millimeter-wave radar cover plate according to any one of the precedent claims, wherein the hidden heating and defrosting structure further comprises a decorative film (3) formed on a surface of another side of the panel body (2) or formed on a surface of another side of the heating film (1).

7. The hidden heating and defrosting structure of a millimeter-wave radar cover plate according to any one of the precedent claims, wherein the heating film (1) is a transparent polycarbonate film.

8. The hidden heating and defrosting structure of a millimeter-wave radar cover plate according to any one of the precedent claims, wherein the thickness of the heating film (1) is 0.5 mm.

9. A preparation method for the hidden heating and defrosting structure of a millimeter-wave radar cover plate according to any one of claims 1 to 8, **characterized in that**, it comprises the following steps:
S1: Prepare a master with a microstructure by photolithography or machining, and then transfer the microstructure to a surface of a film by UV embossing to form a film with a microstructure;
S2: Apply a conductive ink to the microstructure of the film by scrape coating and solidify it to form a conductive network;
S3: Adhere a flexible electrode (13) on the film and connect the flexible electrode (13) to the conductive network;
S4: Perform high-pressure forming on the film to obtain a heating film (1), and then remove excess flanges;
S5: Place the heating film (1) as an insert on a surface of a panel body (2) for injection molding to obtain the hidden heating and defrosting structure.

10. A millimeter-wave radar cover plate, **characterized in that**, it adopts the hidden heating and defrosting structure according to any one of claims 1 to 8.

11. The millimeter-wave radar cover plate according to the precedent claim, wherein a surface of the millimeter-wave radar cover plate is further provided with an anti-UV coating.
